# EUROPEAN PATENT SPECIFICATION

(11) **EP 2 613 455 B1**
(45) Date of publication and mention of the grant of the patent: **05.04.2017**
(21) Application number: 12150410.4
(22) Date of filing: 06.01.2012
(51) Int. Cl.: H04B 5/02, H04B 5/00

(54) **Mobile wireless communications device with NFC coupling circuit and related methods**
Mobile drahtlose Kommunikationsvorrichtung mit Nahfeldkommunikations-Kopplungsschaltung und zugehörige Verfahren
Dispositif mobile de communications sans fil doté d'un circuit de couplage NFC et procédés apparentés

(43) Date of publication of application: 10.07.2013
(73) Proprietor: BlackBerry Limited, Waterloo, ON N2K 0A7 (CA)
(72) Inventor: Zhu, Lizhong, Waterloo, Ontario N2L 3W8 (CA); Zhu, Libo, Waterloo, Ontario N2L 3W8 (CA)
(74) Representative: Noble, Nicholas

(56) References cited:
- EP-A1- 2 393 215
- WO-A2-2008/117029
- US-A1- 2011 238 518

## Description

### Technical Field

This application relates to the field of communications, and more particularly, to near field communication devices and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters. Typical NFC chips operate in one of three modes: an integrated circuit (IC) card emulation mode (NFC device appears to an external reader as a traditional contactless smart card); a reader/writer mode (NFC device reads NFC tags); and a peer-to-peer mode (two NFC devices exchanging data).

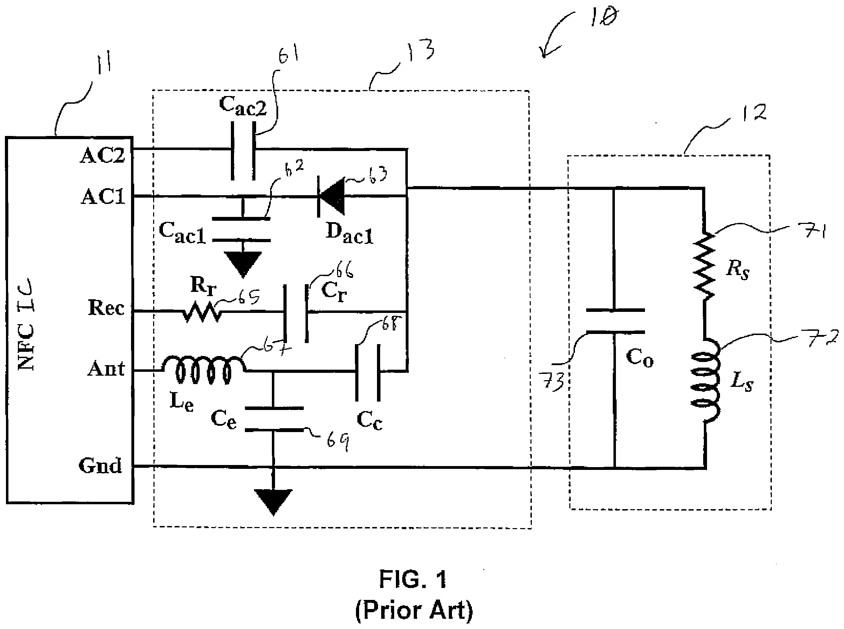

Referring to FIG. 1, a typical NFC device **10** includes an NFC IC chip **11,** an NFC antenna **12,** and a coupling circuit **13** coupled between the NFC IC chip and the NFC antenna. The NFC antenna **12** is modeled to include a resistor **71** (R_{S}), an inductor **72** (L_{S}) coupled in series thereto, and a capacitor **73** (C_{A}) coupled in parallel to the resistor and the inductor. The coupling circuit **13** illustratively includes a tuning circuit comprising a first capacitor **61** (C_{AC2}), a second capacitor **62** (C_{AC1}) coupled in parallel to the first capacitor, and a diode **63** (D_{AC1}) coupled in series to the second capacitor. The coupling circuit also includes a receive branch including a resistor **65** (R_{R}), and a capacitor **66** (C_{R}) coupled in series thereto, and an antenna branch including an inductor **67** (L_{E}), and a pair of capacitors **68-69** (C_{E,C}) coupled thereto. Drawbacks to this NFC device **10** may include heavy loading of the external circuit to the NFC resonating tank, thereby reducing the Q factor of the NFC antenna **12.** Moreover, the different operating modes of the NFC IC chip **11** may not be optimized, and it may be difficult to match and tune each coupling branch without unintentional cascaded effects.

International Patent Publication No. 2008/117029 discloses an NFC communicator that has an antenna circuit to enable inductive coupling, via an RF H field, of the NFC communicator and another near field RF communicator in near field range.

European Patent Publication No. 2393215 discloses a transmitter/receiver circuit comprises a wireless transmission/reception circuit having a first inductor for generating/detecting a magnetic induction field onto which an output of a radio frequency circuit is modulated and a second inductor in series with the first inductor for generating/detecting an electric induction field onto which the output of the radio frequency circuit is modulated.

United States Patent Publication No. 2011/238518 discloses a method and solution that can be mainly used for data transmission in cashless payment applications, especially those realized from the mobile phone while using RFID and/or NFC platform.

Aspects of an invention are defined in the appended independent claims.

### Brief Description of the Drawings

FIG. 1 is a schematic circuit diagram of a portion of a mobile wireless communications device, according to the prior art.
FIG. 2 is a schematic circuit diagram of an example embodiment of a mobile wireless communications device, according to the present disclosure.
FIG. 3 is a schematic circuit diagram of a portion of the mobile wireless communications device of FIG. 2.

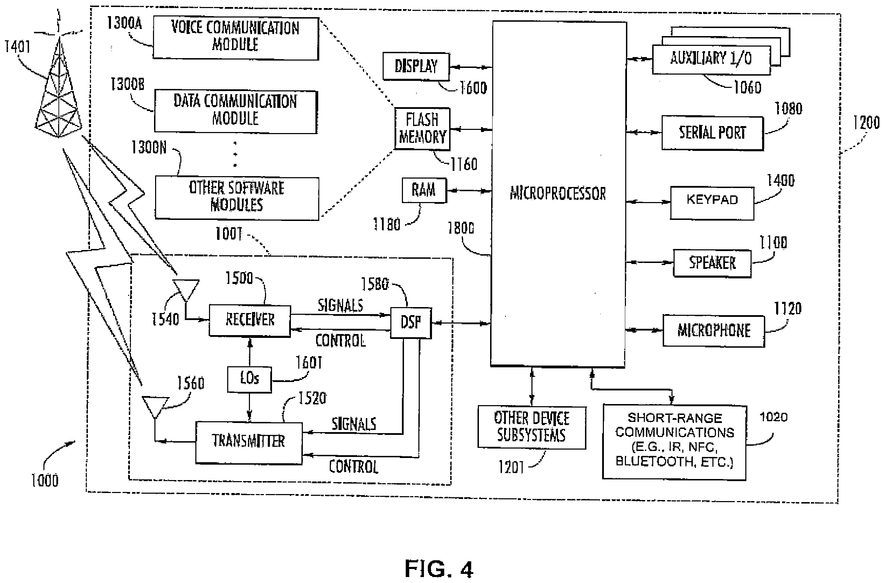

FIG. 4 is a schematic block diagram illustrating example components of a mobile wireless communications device that may be used with the mobile wireless communications device of FIG. 2.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 0-40cm, but other suitable versions of near-field communication which may have different operating frequencies, effective ranges, etc., for example, may also be used.

Generally speaking, a mobile wireless communications device may include a housing, a wireless transceiver carried by the housing, and a processor carried by the housing and coupled to the wireless transceiver. The mobile wireless communications device may also include an NFC IC carried by the housing and coupled to the processor, an NFC antenna carried by the housing, and a coupling circuit between the NFC IC and the NFC antenna. The coupling circuit may include a capacitive network comprising a plurality of capacitors coupled in series with each other and in parallel with the NFC antenna, a transmit branch coupled between the NFC IC and a first node between a first pair of capacitors of the plurality thereof, and a receive branch coupled between the NFC IC and the first node between the first pair of capacitors of the plurality thereof.

The coupling circuit may further comprise at least one tuning branch coupled between the NFC IC and a second node between a second pair of capacitors of the plurality thereof. In some embodiments, the at least one tuning branch may comprise a pair thereof.

More specifically, the pair of tuning branches may comprise a first tuning branch comprising a first capacitor, and a second tuning branch comprising a second capacitor, and a diode coupled thereto. The NFC transmit branch may comprise an inductor and a capacitor coupled thereto. The NFC transmit branch may further comprise another capacitor coupled at a node between the inductor and the capacitor and a voltage reference.

The NFC receive branch may comprise a resistor and a capacitor coupled thereto. The NFC IC may be configured to cooperate with the processor to operate in an IC card emulation mode or a reader/writer mode. For example, the wireless transceiver may comprise a cellular transceiver.

Another aspect is directed to a method for making a mobile wireless communications device comprising a wireless transceiver, a processor coupled to the wireless transceiver, an NFC IC, and an NFC antenna. The method may comprise coupling a coupling circuit between the NFC IC and the NFC antenna. The coupling circuit may include a capacitive network comprising a plurality of capacitors coupled in series with each other and in parallel with the NFC antenna, a transmit branch coupled between the NFC IC and a first node between a first pair of capacitors of the plurality thereof, and a receive branch coupled between the NFC IC and the first node between the first pair of capacitors of the plurality thereof.

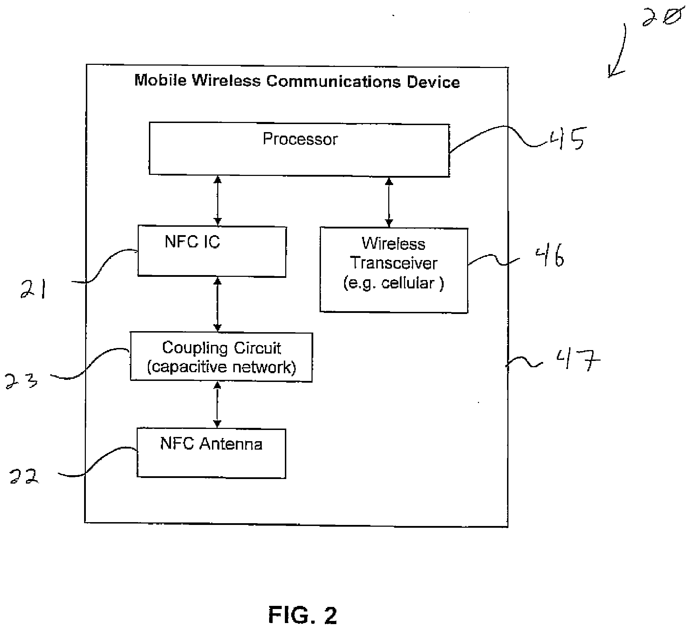

Referring now to FIG. 2, a mobile wireless communications device **20** according to the present disclosure is now described. The mobile wireless communications device **20** illustratively includes a housing **47,** a wireless transceiver **46** carried by the housing, and a processor **45** carried by the housing and coupled to the wireless transceiver (e.g. cellular transceiver). The mobile wireless communications device **20** illustratively includes an NFC IC **21** carried by the housing **47** and coupled to the processor **45,** an NFC antenna **22** carried by the housing, and a coupling circuit **23** between the NFC IC and the NFC antenna.

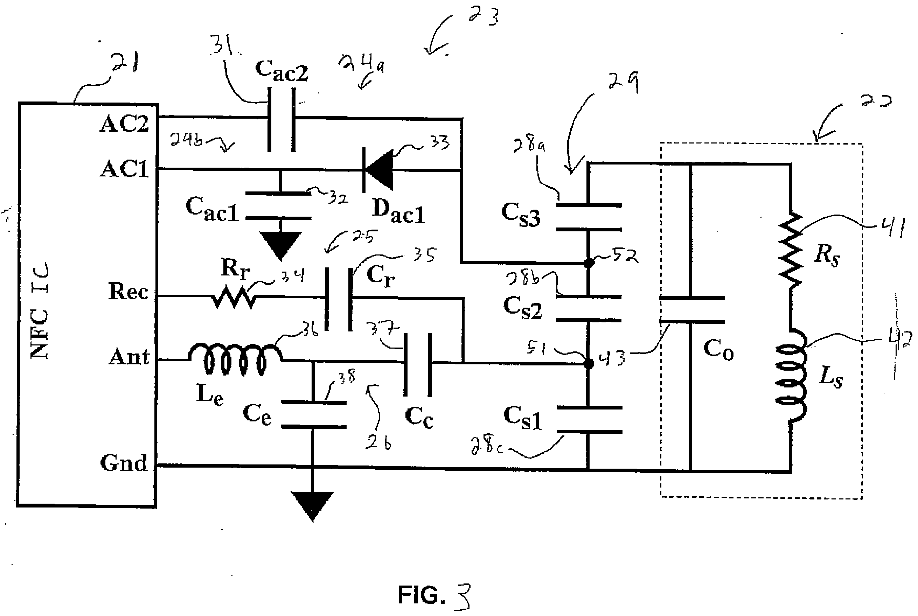

Referring now additionally to FIG. 3, the NFC IC **21** comprises a plurality of terminals including a reference voltage terminal (e.g. ground voltage terminal), an antenna terminal, a receive terminal, and first and second AC charge terminals. The NFC IC **21** may be configured to cooperate with the processor **45** to operate in an IC card emulation mode (NFC device appears to an external reader as a traditional contactless smart card), a reader/writer mode (NFC device reads NFC tags), and a peer-to-peer mode (two NFC devices exchanging data).

The coupling circuit **23** illustratively includes a capacitive network **29** comprising a plurality of capacitors **28a-28c** (C_{S1-S3}) (illustratively three) coupled in series with each other and in parallel with the NFC antenna **22,** a transmit branch **26** coupled between the NFC IC **21** and a first node **43** between a first pair of capacitors **28b-28c,** and a receive branch **25** coupled between the NFC IC and the first node. In other embodiments, the plurality of capacitors may comprise four or more series coupled capacitors.

The coupling circuit **23** illustratively includes first and second tuning branches **24a-24b** coupled between the NFC IC **21** and a second node **52** between a second pair of capacitors **28a-28b.** In other embodiments, the tuning branches **24a-24b** may be reduced to a single tuning branch.

More specifically, the first tuning branch **24a** comprises a first capacitor **31** (C_{AC2}), and is coupled to the second AC charge terminal of the NFC IC **21.** During operation, the second AC charge terminal of the NFC IC **21** generates a voltage to charge this first capacitor **31.** The second tuning branch **24b** illustratively includes a second capacitor **32** (C_{AC1}), and a diode **33** (D_{AC1}) coupled in series with the diode, and is coupled to the first AC charge terminal of the NFC IC **21.** The first AC charge terminal also provides a voltage for charging the second capacitor **32.** The NFC transmit branch **26** illustratively includes an inductor **36** (L_{E}), a capacitor **37** (C_{C}) coupled in series with the inductor, and another capacitor **38** (C_{E}) coupled at a node between the inductor and the capacitor and a voltage reference (illustrated as ground voltage). The NFC receive branch **25** illustratively includes a resistor **34** (R_{R}), and a capacitor **35** (C_{R}) coupled in series thereto.

As will be appreciated by those skilled in the art, the NFC antenna **22** may be modeled as a plurality of electrical components. In the illustrated embodiment, the NFC antenna **22** is modeled to illustratively include a resistor **41** (R_{S}), an inductor **42** (L_{S}) coupled in series with the resistor, and a capacitor **43** (C_{O}) coupled in parallel with the resistor and the inductor.

In the typical coupling circuit (FIG. 1), the reader/writer mode links of the antenna and receiver terminals of the NFC IC 11 and the IC card emulation mode links of the first and second AC charge terminals of the NFC IC are directly coupled to the NFC antenna **12.** Advantageously, in the example embodiment disclosed herein, the capacitive network **29** of the coupling circuit **23** is configured to isolate the IC card emulation mode and the reader/writer mode of the NFC IC **21.** The capacitive network **29** is configured to partially capacitively couple the NFC antenna **22** to the NFC transmit and receive branches **25-26.** The coupling circuit **23** may provide for increased Q (quality) factor for the NFC antenna **22** due to the partial NFC circuit couplings. Moreover, by adjusting the capacitance vales of the capacitors **28a-28c** of the capacitive network **29,** the reader/writer and IC card emulation modes may be balanced and optimized.

Another aspect is directed to a method for making a mobile wireless communications device **20** comprising a wireless transceiver **46,** a processor **45** coupled to the wireless transceiver, an NFC IC **21,** and an NFC antenna **22.** The method may comprise coupling a coupling circuit **23** between the NFC IC **21** and the NFC antenna **22.** The coupling circuit **23** may include a capacitive network **29** comprising a plurality of capacitors **28a-28c** coupled in series with each other and in parallel with the NFC antenna **22,** a transmit branch **26** coupled between the NFC IC **21** and a first node **51** between a first pair of capacitors **28b-28c** of the plurality thereof, and a receive branch **25** coupled between the NFC IC and the first node between the first pair of capacitors **28a-28b** of the plurality thereof.

Example components of a mobile wireless communications device **1000** that may be used in accordance with the above-described embodiments are further described below with reference to FIG. 3. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 3. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) 1601. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device 1000. The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or an NFC sensor for communicating with an NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (20) comprising:
a housing (47);
a wireless transceiver (46) carried by said housing;
a processor (45) carried by said housing and coupled to said wireless transceiver;
a near field communication, NFC, integrate circuit, IC, (21) carried by said housing and coupled to said processor;
an NFC antenna (22) carried by said housing; and
a coupling circuit (23) between said NFC IC and said NFC antenna comprising
a capacitive network (29) comprising a plurality of capacitors (28a-28c) coupled in series with each other and in parallel with said NFC antenna,
a transmit branch (26) coupled between said NFC IC and a first node (51) between a first pair of capacitors (28b-28c) of said plurality thereof, and
a receive branch (25) coupled between said NFC IC and the first node between the first pair of capacitors of said plurality thereof; **characterized in that** said coupling circuit further comprises a first and a second tuning branch (24a, 24b) coupled between said NFC IC and a second node (52) between a second pair of capacitors (28a-28b) of said plurality thereof, and **in that** the first tuning branch (24a) comprises a first capacitor (31), and the second tuning branch (24b) comprises a second capacitor (32), and a diode (33) coupled thereto.

2. The mobile wireless communications device of Claim 1 wherein said NFC transmit branch (26) comprises an inductor (36) and a capacitor (37) coupled thereto.

3. The mobile wireless communications device of Claim 2 wherein said NFC transmit branch further comprises another capacitor (38) coupled at a node between said inductor and said capacitor and a voltage reference.

4. The mobile wireless communications device of Claim 1 wherein said NFC receive branch (25) comprises a resistor (34) and a capacitor (35) coupled thereto.

5. The mobile wireless communications device of Claim 1 wherein said NFC IC is configured to cooperate with said processor to operate in an IC card emulation mode or a reader/writer mode.

6. The mobile wireless communications device of Claim 1 wherein said wireless transceiver comprises a cellular transceiver.

7. A method for making a mobile wireless communications device (20) comprising a wireless transceiver (46), a processor (45) coupled to the wireless transceiver, a near field communication, NFC, integrated circuit (21), and an NFC antenna (22), the method comprising:
coupling a coupling circuit (23)between the NFC IC and the NFC antenna, the coupling circuit comprising
a capacitive network (29) comprising a plurality of capacitors (28a-28c) coupled in series with each other and in parallel with the NFC antenna,
a transmit branch (26) coupled between the NFC IC and a first node (51) between a first pair of capacitors (28b-28c) of the plurality thereof, and
a receive branch (25) coupled between the NFC IC and the first node between the first pair of capacitors of the plurality thereof, **characterized in that** the coupling circuit further comprises a first and a second tuning branch (24a, 24b) coupled between the NFC IC and a second node (52) between a second pair of capacitors (28a-28b) of the plurality thereof, and **in that** the first tuning branch (24a) comprises a first capacitor (31), and the second tuning branch (24b) comprises a second capacitor (32), and a diode (33) coupled thereto.

8. The method of Claim 7 wherein the NFC transmit branch (26) comprises an inductor (36) and a capacitor (37) coupled thereto.

9. The method of Claim 8 wherein the NFC transmit branch (26) further comprises another capacitor (38) coupled at a node between the inductor and the capacitor and a voltage reference.

## Patentansprüche

1. Mobile Drahtloskommunikationsvorrichtung (20) mit:
einem Gehäuse (47),
einem Drahtlos-Sende-Empfänger (46), der von dem Gehäuse getragen wird,
einem Prozessor (45), der von dem Gehäuse getragen wird und mit dem Drahtlos-Sende-Empfänger gekoppelt ist,
einer integrierten Schaltung, IC, (21) für Nahfeldkommunikation, NFC, wobei die NFC-IC von dem Gehäuse getragen wird und mit dem Prozessor gekoppelt ist,
einer NFC-Antenne (22), die von dem Gehäuse getragen wird, und
einer Koppelschaltung (23) zwischen der NFC-IC und der NFC-Antenne mit
einem kapazitiven Netz (29) mit einer Vielzahl von Kondensatoren (28a-28c), die miteinander in Serie und mit der NFC-Antenne parallel gekoppelt sind,
einem Sendearm (26), der zwischen der NFC-IC und einem ersten Knoten (51) zwischen einem ersten Paar von Kondensatoren (28b-28c) der Vielzahl davon gekoppelt ist, und
einem Empfangsarm (25), der zwischen der NFC-IC und dem ersten Knoten zwischen dem ersten Paar von Kondensatoren der Vielzahl davon gekoppelt ist,
**dadurch gekennzeichnet, dass**
die Koppelschaltung ferner einen ersten und einen zweiten Abstimmarm (24a, 24b) aufweist, die zwischen der NFC-IC und einem zweiten Knoten (52) zwischen einem zweiten Paar von Kondensatoren (28a-28b) der Vielzahl davon gekoppelt sind, und
dadurch, dass der erste Abstimmarm (24a) einen ersten Kondensator (31) aufweist und der zweite Abstimmarm (24b) einen zweiten Kondensator (32) und eine damit gekoppelte Diode (33) aufweist.

2. Mobile Drahtloskommunikationsvorrichtung nach Anspruch 1, wobei der NFC-Sendearm (26) eine Spule bzw. eine Induktivität (36) und einen damit gekoppelten Kondensator (37) aufweist.

3. Mobile Drahtloskommunikationsvorrichtung nach Anspruch 2, wobei der NFC-Sendearm ferner einen weiteren Kondensator (38) aufweist, der an einen Knoten zwischen der Spule bzw. der Induktivität und dem Kondensator und eine Spannungsreferenz gekoppelt ist.

4. Mobile Drahtloskommunikationsvorrichtung nach Anspruch 1, wobei der NFC-Empfangsarm (25) einen Widerstand (34) und einen Kondensator (35) aufweist, der damit gekoppelt ist.

5. Mobile Drahtloskommunikationsvorrichtung nach Anspruch 1, wobei die NFC-IC dazu konfiguriert ist, mit dem Prozessor zusammenzuwirken, um in einem IC-Karten-Emulationsmodus oder einem Schreiber-/Leser-Modus zu arbeiten.

6. Mobile Drahtloskommunikationsvorrichtung nach Anspruch 1, wobei der Drahtlos-Sende-Empfänger einen Zellularsendeempfänger aufweist.

7. Verfahren zum Herstellen einer mobilen Drahtloskommunikationsvorrichtung (20) mit einem Drahtlos-Sende-Empfänger (46), einem Prozessor (45), der mit dem Drahtlos-Sende-Empfänger gekoppelt ist, einer integrierten Schaltung (21) für Nahfeldkommunikation, NFC, und einer NFC-Antenne (22), wobei das Verfahren Folgendes aufweist:
Koppeln einer Koppelschaltung (23) zwischen der NFC-IC und der NFC-Antenne, wobei die Koppelschaltung Folgendes aufweist:
ein kapazitives Netz (29) mit einer Vielzahl von Kondensatoren (28a-28c), die miteinander in Serie und mit der NFC-Antenne parallel gekoppelt sind,
einen Sendearm (26), der zwischen der NFC-IC und einem ersten Knoten (51) zwischen einem ersten Paar von Kondensatoren (28b-28c) der Vielzahl davon gekoppelt ist, und
einen Empfangsarm (25), der zwischen der NFC-IC und dem ersten Knoten zwischen dem ersten Paar von Kondensatoren der Vielzahl davon gekoppelt ist,
**dadurch gekennzeichnet, dass**
die Koppelschaltung ferner einen ersten und einen zweiten Abstimmarm (24a, 24b) aufweist, die zwischen der NFC-IC und einem zweiten Knoten (52) zwischen einem zweiten Paar von Kondensatoren (28a-28b) der Vielzahl davon gekoppelt sind, und
dadurch, dass der erste Abstimmarm (24a) einen ersten Kondensator (31) aufweist und der zweite Abstimmarm (24b) einen zweiten Kondensator (32) und eine damit gekoppelte Diode (33) aufweist.

8. Verfahren nach Anspruch 7, wobei der NFC-Sendearm (26) eine Spule bzw. eine Induktivität (36) und einen damit gekoppelten Kondensator (37) aufweist.

9. Verfahren nach Anspruch 8, wobei der NFC-Sendearm (26) ferner einen weiteren Kondensator (38) aufweist, der an einen Knoten zwischen der Spule bzw. der Induktivität und dem Kondensator und eine Spannungsreferenz gekoppelt ist.

## Revendications

1. Dispositif de communication mobile sans fil (20) comprenant :
un boîtier (47) ;
un émetteur-récepteur sans fil (46) porté par ledit boîtier ;
un processeur (45) porté par ledit boîtier et couplé audit émetteur-récepteur sans fil ;
un circuit intégré, IC pour « Integrated Circuit », de communication en champ proche, NFC pour *« Near Field Communication* », (21) porté par ledit boîtier et couplé audit processeur ;
une antenne NFC (22) portée par ledit boîtier ; et
un circuit de couplage (23) entre ledit IC NFC et ladite antenne NFC, comprenant :
un réseau capacitif (29) incluant une pluralité de condensateurs (28a à 28c) montés en série entre eux et en parallèle avec ladite antenne NFC ;
une branche d'émission (26) couplée entre ledit IC NFC et un premier noeud (51) placé entre une première paire de condensateurs (28b, 28c) parmi ladite pluralité de ceux-ci ; et
une branche de réception (25) couplée entre ledit IC NFC et le premier noeud placé entre la première paire de condensateurs parmi ladite pluralité de ceux-ci ;
**caractérisé en ce que** :
ledit circuit de couplage comprend en outre une première et une seconde branche de syntonisation (24a, 24b) couplées entre ledit IC NFC et un second noeud (52) placé entre une seconde paire de condensateurs (28a, 28b) parmi ladite pluralité de ceux-ci ;
**en ce que** la première branche de syntonisation (24a) comprend un premier condensateur (31) et la seconde branche de syntonisation (24b) comprend un second condensateur (32), et une diode (33) qui y est couplée.

2. Dispositif de communication mobile sans fil selon la revendication 1, dans lequel ladite branche d'émission NFC (26) comprend une inductance (36) et un condensateur (37) qui y est couplé.

3. Dispositif de communication mobile sans fil selon la revendication 2, dans lequel ladite branche d'émission NFC comprend en outre un autre condensateur (38) couplé à un noeud situé entre ladite inductance et ledit condensateur, ainsi qu'à une référence de tension.

4. Dispositif de communication mobile sans fil selon la revendication 1, dans lequel ladite branche de réception NFC (25) comprend une résistance (34) et un condensateur (35) qui y est couplé.

5. Dispositif de communication mobile sans fil selon la revendication 1, dans lequel ledit IC NFC est configuré pour coopérer avec ledit processeur afin de fonctionner dans un mode d'émulation de carte de circuit ou dans un mode de lecture/écriture.

6. Dispositif de communication mobile sans fil selon la revendication 1, dans lequel ledit émetteur-récepteur sans fil consiste en un émetteur-récepteur cellulaire.

7. Procédé de fabrication d'un dispositif de communication mobile sans fil (20) comprenant un émetteur-récepteur sans fil (46), un processeur (45) couplé audit émetteur-récepteur sans fil, un circuit intégré, IC pour « Integrated Circuit », de communication en champ proche, NFC pour « *Near Field Communication* », (21) et une antenne NFC (22), le procédé comprenant les étapes consistant à :
coupler un circuit de couplage (23) entre le IC NFC et l'antenne NFC, le circuit de couplage comprenant :
un réseau capacitif (29) incluant une pluralité de condensateurs (28a à 28c) montés en série entre eux et en parallèle avec ladite antenne NFC ;
une branche d'émission (26) couplée entre ledit IC NFC et un premier noeud (51) placé entre une première paire de condensateurs (28b, 28c) parmi ladite pluralité de ceux-ci ; et
une branche de réception (25) couplée entre ledit IC NFC et le premier noeud placé entre la première paire de condensateurs parmi ladite pluralité de ceux-ci ;
**caractérisé en ce que** :
ledit circuit de couplage comprend en outre une première et une seconde branche de syntonisation (24a, 24b) couplées entre ledit IC NFC et un second noeud (52) placé entre une seconde paire de condensateurs (28a, 28b) parmi ladite pluralité de ceux-ci ; et
**en ce que** la première branche de syntonisation (24a) comprend un premier condensateur (31) et la seconde branche de syntonisation (24b) comprend un second condensateur (32), et une diode (33) qui y est couplée.

8. Procédé selon la revendication 7, dans lequel la branche d'émission NFC (26) comprend une inductance (36) et un condensateur (37) qui y est couplé.

9. Procédé selon la revendication 8, dans lequel la branche d'émission NFC (26) comprend en outre un autre condensateur (38) couplé à un noeud situé entre ladite inductance et ledit condensateur, ainsi qu'à une référence de tension.
